# FASCICULE DE BREVET EUROPEEN

(11) **EP 3 630 505 B1**
(45) Date de publication et mention de la délivrance du brevet: **06.09.2023**
(21) Numéro de dépôt: 18732842.2
(22) Date de dépôt: 31.05.2018
(51) Int. Cl.: B60C 23/04, G08G 1/09, G06K 19/077, G08G 1/056, G08G 1/017

(54) **PROCÉDÉ DE FOURNITURE D'UN SERVICE LIE A L'ÉTAT ET/OU AU COMPORTEMENT D'UN VÉHICULE ET/OU D'UN PNEUMATIQUE**
VERFAHREN ZUR BEREITSTELLUNG EINER DIENSTLEISTUNG IN VERBINDUNG MIT DEM ZUSTAND UND/ODER DEM VERHALTEN EINES FAHRZEUGS UND/ODER EINES REIFENS
METHOD FOR PROVIDING A SERVICE LINKED TO THE CONDITION AND/OR BEHAVIOUR OF A VEHICLE AND/OR OF A TYRE

(30) Priorité: 02.06.2017 FR 1754916
(43) Date de publication de la demande: 08.04.2020
(73) Titulaire: Compagnie Générale des Etablissements Michelin, 63000 Clermont-Ferrand (FR)
(72) Inventeur: LEDOUX, Thomas, 63040 Clermont-Ferrand Cedex 9 (FR); FANGEAT, Nicolas, 63040 Clermont-Ferrand Cedex 9 (FR)
(74) Mandataire: Roussy, Delphine
(86) Numéro de dépôt international: PCT/FR2018/051262
(87) Numéro de publication internationale: WO 2018/220334

(56) Documents cités:
- WO-A1-2005/113261
- JP-A- 2016 057 826
- US-A1- 2012 235 807

## Description

### DOMAINE DE L'INVENTION

La présente invention est relative à un procédé de fourniture d'un service lié à l'état et/ou au comportement d'un véhicule et/ou d'un pneumatique.

On connaît de nombreux systèmes permettant le diagnostic d'un véhicule. Pour l'usure, on peut ainsi citer des témoins d'usure présents sur les pneumatiques, ou des dispositifs manuels de mesure de la hauteur de gomme restante sur un pneumatique. Et le document JP2016057826 décrit par exemple un procédé permettant d'autoriser le passage d'un véhicule à un point de contrôle en fonction de la météo et du type de pneumatiques installés sur le véhicule. Ainsi, au passage d'un véhicule à l'entrée d'une zone contrôlée, le type de pneumatique est déterminé et envoyé à un serveur distant. On détermine alors si ce type de pneumatiques est compatibles aux conditions météorologiques et, si la réponse est positive, on autorise l'accès du véhicule.

Concernant la mesure de pression, on peut citer des systèmes installés directement sur les roues des véhicules, qui déterminent la pression au moyen d'un capteur de pression et qui envoient ensuite l'information par radiofréquence jusqu'à l'électronique centrale du véhicule ; des systèmes débarqués permettant la mesure de pression de contact des pneumatiques au niveau du sol, ou bien encore des manomètres manuels.

La présente invention vise à fournir un procédé permettant de fournir un service à valeur ajoutée partant de paramètres concernant l'état et/ou le comportement d'un véhicule et/ou d'un pneumatique. Or, aucun des systèmes connus ne permet, en l'état, un recoupement de différentes informations concernant le véhicule et ses pneumatiques.

La présente invention vise donc à remédier à cet inconvénient en proposant un procédé tel que décrit ci-après.

### BREVE DESCRIPTION DE L'INVENTION

Ainsi, l'invention concerne un procédé de fourniture d'un service lié à l'état et/ou au comportement d'un véhicule et/ou d'un pneumatique, le procédé comprenant les étapes suivantes :
- Lors du passage d'un véhicule au niveau d'une infrastructure routière équipée d'un système d'évaluation de l'état d'un véhicule, on détermine un identifiant du véhicule et/ou d'un pneumatique du véhicule,
- Lors de ce même passage, on détermine au moins un paramètre représentatif de l'état du véhicule et/ou d'un composant du véhicule,
- On transmet les données déterminées à un serveur de données distant,
- A partir des données d'identification, on récupère des données externes concernant le véhicule et/ou le pneumatique et/ou des conditions de roulage,
- On combine les informations déterminées avec les données externes, pour déterminer un indicateur pertinent concernant l'état et/ou le comportement d'un véhicule,
- On transmet l'indicateur pertinent à un fournisseur de service lié à l'état et/ou au comportement d'un véhicule et/ou d'un pneumatique.

De manière préférentielle, le système d'évaluation de l'état d'un véhicule est installé dans une zone de roulage contrainte de l'infrastructure routière.

Par « infrastructure routière » et « zone de roulage contrainte » on entend par exemple une infrastructure telle qu'une autoroute, et des zones de passage obligé telle qu'une voie de péage, une voie d'accès à l'autoroute, les voies d'accès à une station-service ...On entend également une infrastructure telle qu'un parking, avec des zones de passage obligé tel que les voies d'accès à un parking souterrain ou aérien On entend également une infrastructure telle qu'une aire de services ou aire de repos aux abords d'une route ou autoroute. Dans ce cas la zone de roulage contrainte peut être une simple voie de circulation et/ou de passage de l'aire, matérialisée par des marquages au sol et/ou des obstacles physiques.

Un tel positionnement présente plusieurs avantages :
- D'une part, il s'agit d'un point de passage contraint d'une route, et cela permet d'assurer le passage des véhicules sur le système d'évaluation sans avoir à détourner les véhicules de leur trajet habituel,
- D'autre part, le positionnement à proximité d'une infrastructure routière permet de bénéficier des moyens de communication et infrastructures préexistantes sur de tels emplacements.
- En outre, les gestionnaires des réseaux autoroutiers possèdent des systèmes d'information sur lesquels sont présents de nombreuses données concernant les conditions météorologiques, l'état de la route, ce qui permet de faciliter l'accès aux données externes.

Selon l'invention, le procédé comprend en outre une étape au cours de laquelle on géolocalise le véhicule lors de son passage sur le système d'évaluation, et dans lequel les données de géolocalisation sont transmises avec les autres données déterminées.

Dans un mode de réalisation préférentiel, l'étape de détermination d'un identifiant comprend une étape de lecture d'un identifiant RFID installé sur le véhicule et/ou sur un pneumatique.

Dans un mode de réalisation alternatif, l'étape de détermination d'un identifiant comprend une étape de lecture d'un identifiant stocké dans une mémoire d'un boitier installé dans le véhicule, tel qu'un badge de télépéage.

Dans un mode de réalisation préférentiel, le paramètre représentatif de l'état du véhicule et/ou d'un composant du véhicule est compris dans le groupe comprenant : la pression d'un pneumatique, la température d'air interne d'un pneumatique, le niveau d'usure d'un pneumatique, la longueur d'aire de contact d'un pneumatique, la vitesse du véhicule, le sens de roulage du véhicule, la charge portée par le véhicule et/ou par chaque pneumatique.

Dans un mode de réalisation préférentiel, les données externes sont comprises dans le groupe comprenant : les dimensions et/ou caractéristiques d'un pneumatique, les caractéristiques du véhicule, des données météorologiques, des données concernant l'état d'une route.

Dans un mode de réalisation préférentiel, l'étape de détermination d'un paramètre représentatif de l'état du véhicule et/ou d'un composant du véhicule comprend une étape de lecture de données stockées dans un capteur de pression et/ou température installé sur ou dans un pneumatique du véhicule et/ou sur une jante d'une roue du véhicule. Par exemple, on peut lire les données mesurées et stockées par un capteur de pression et/ou température, par exemple type TMS ou TPMS. On précise ici qu'on peut également utiliser un capteur permettant de déterminer les paramètres suivants :
- Le nombre de tours réalisés par ledit pneumatique lors du roulage,
- La longueur d'aire de contact dudit pneumatique lorsque le capteur est collé sur la gomme intérieure du pneumatique, préférentiellement du côté opposé à la bande de roulement.

Dans un mode de réalisation préférentiel, l'étape de détermination d'un paramètre comprend une étape de mesure d'une hauteur de gomme restante sur un pneumatique par des capteurs magnétiques intégrés dans le système d'évaluation.

Dans un mode de réalisation préférentiel, l'indicateur pertinent est un indicateur de surcharge véhicule, et le fournisseur de service est un concessionnaire autoroutier et/ou des forces de l'ordre.

Dans un mode de réalisation préférentiel, l'indicateur pertinent est un indicateur de mauvais sens de roulage, et le fournisseur de service est un concessionnaire autoroutier et/ou des forces de l'ordre.

Dans un mode de réalisation préférentiel, l'indicateur pertinent est un indicateur d'évolution de l'usure d'un pneumatique, et le fournisseur de service est un gestionnaire de flotte de véhicules et/ou un acteur de la maintenance véhicule.

Dans un mode de réalisation préférentiel, l'indicateur pertinent est un indicateur de mauvaise pression de gonflage d'un pneumatique, et le fournisseur de service est un gestionnaire de flotte de véhicules et/ou un acteur de la maintenance véhicule.

Dans un mode de réalisation préférentiel, le système d'évaluation de l'état d'un véhicule comprend les éléments suivants :
- Un sous-système de mesure de l'état d'au moins un pneumatique du véhicule,
- Un sous-système de lecture de données d'identification d'un pneumatique et/ou du véhicule,
- Un sous-système de transmission des données mesurées et des données d'identification en direction d'une base de données distantes,
les trois sous-systèmes étant installés dans un ou plusieurs boitiers destinés à être installés sur ou à proximité d'une infrastructure routière, au moins l'un des boitiers étant destiné à être installé dans une zone de roulage contrainte de l'infrastructure routière.

Un tel système d'évaluation peut également comprendre une ou plusieurs des caractéristiques suivantes, prises seules ou en combinaison :
- Le sous-système de mesure et le sous-système de lecture de données d'identification sont avantageusement installés dans le boitier situé dans la zone de roulage du véhicule, pour que les mesures puissent être effectuées au moment où le véhicule passe sur le boitier.
- Le sous-système de lecture de données d'identification comprend, un lecteur RFID permettant de lire des identifiants stockés dans des puces RFID qui peuvent être installées sur chacun des pneumatiques du véhicule, et/ou sur le véhicule en lui-même. Avantageusement, ce lecteur comprend un ou plusieurs antennes de lecture, choisies parmi les antennes à polarisation linéaire ou circulaire. De telles antennes permettent d'assurer la lecture des puces RFID quelle que soit leur emplacement sur le véhicule et/ou les pneumatiques. En effet, lors de l'utilisation d'un système selon l'invention, le positionnement des étiquettes ou puces RFID sur les véhicules ne peut être présumé, pas plus que le positionnement du véhicule par rapport au boitier lors de son passage sur ledit boitier.

- le sous-système de mesure de l'état d'au moins un pneumatique du véhicule est un sous-système de mesure de l'usure du pneumatique.
- le sous-système de mesure comprend au moins un capteur compris dans le groupe comprenant : un capteur d'usure à courant de Foucault, un capteur d'usure à reluctance variable, un capteur d'usure optique à base de laser, un capteur de pression, un capteur de charge. Les capteurs à courant de Foucault ou des capteurs à reluctance variable sont particulièrement avantageux pour une installation extérieure, car ils sont insensibles à la poussière et aux salissures d'épaisseur faible, typiquement inférieure au millimètre. Une telle caractéristique est un réel avantage dans un système selon l'invention car les sols de roulage des barrières de péage ne sont généralement pas nettoyés régulièrement, pour cause de difficultés d'accès.
- Le système comprend un dispositif de réception de données installé dans le véhicule.

Dans ce cas, il est avantageux que le sous-système de transmission des données mesurées comprenne des moyens de transmission des données en direction du dispositif de réception de données installé sur le véhicule.
- le boitier installé dans la zone de roulage est un boitier de de faible hauteur, noyé dans le sol de roulage, par exemple réalisé en enrobé ou en béton.
- Le système comprend des moyens de communication avec une base de données externe et de réception de données issues de cette base, concernant les dimensions et caractéristiques des pneumatiques en fonction de leurs données d'identification.
- le système comprend des moyens de transmission des données mesurées à un système de pilotage du véhicule et/ou à des actionneurs du véhicule et/ou à des systèmes de sécurité du véhicule.

### DESCRIPTION DU MEILLEUR MODE DE REALISATION DE L'INVENTION

D'autres avantages et modes de réalisation de l'invention apparaîtront avec la description détaillée de figures, effectuée à titre non limitatif, montrant deux exemples de mise en oeuvre d'un système selon l'invention.

Dans cet exemple, une barrière de péage 40 est munie :
- d'un dispositif de mesure de l'usure de pneumatiques 30
- d'un lecteur de RFID 35
- d'un dispositif de transmission d'information 36.

Le dispositif de mesure 30 prend la forme d'un boitier posé au sol, sur lequel un véhicule est destiné à rouler. Ce boitier comprend également le lecteur de RFID 35.

Dans un exemple de réalisation non montré sur la figure, les boîtiers hébergeant les différents sous-systèmes sont circulaires, enfouis dans le sol, de sorte que leur surface supérieure soit plane et situé parallèlement et légèrement sous le plan de la chaussée ou dans le plan de la chaussée.

Le sous-système de mesure comprend un capteur unitaire, ou une ou plusieurs lignes de capteurs, par exemple de type à courants de Foucault ou des capteurs à reluctance variable, afin de mesurer l'usure en plusieurs points du pneumatique, ou de mesurer la pression des pneumatiques.

Les capteurs et l'électronique de gestion du dispositif 30 sont alimentés par le réseau électrique en provenance de la barrière de péage 40.

Le lecteur de RFID 35 est muni d'une ou plusieurs antennes de lecture de RFID à polarisation linéaire ou circulaire. Ces antennes sont disposées à plusieurs positions de la route dans le sens de circulation afin de pouvoir capter les RFID montés sur les pneumatiques de façon plus aisée.

Avantageusement, lesdites antennes peuvent être réparties sur une zone de roulage allant jusqu'à 5 mètres de long mais préférentiellement de 3 mètres de long ou moins.

Lorsqu'un véhicule 10 roule sur le dispositif de mesure de l'usure 30, au passage par la barrière de péage 40, l'usure des quatre pneumatiques 20 est mesurée automatiquement par le dispositif de mesure 30.

En outre, lors du passage dudit véhicule 10 par la barrière de péage 40, les puces RFID collées ou intégrées dans les pneumatiques 20 et la puce RFID 11 collée sur le véhicule 10 sont lus par le lecteur de RFID 35 associé au système de mesure de l'usure 30.

Une fois ces informations d'identification et de niveau d'usure relevés, les données sont transmises au véhicule 10 au moyen du dispositif de transmission de données 36.

Pour ce faire, deux possibilités sont offertes :
- Soit les données sont transmises directement depuis le dispositif 36 jusqu'au dispositif 15 de transmission et réception de données présent sur le véhicule 10.
- Soit les données sont transmises depuis le dispositif 36 jusqu'à une base de données distante 50 au moyen d'un dispositif de transmission de données 45 associé à la barrière de péage 40.

On précise ici que les moyens de transmission 36 et 45 peuvent être réalisés par un seul et unique dispositif

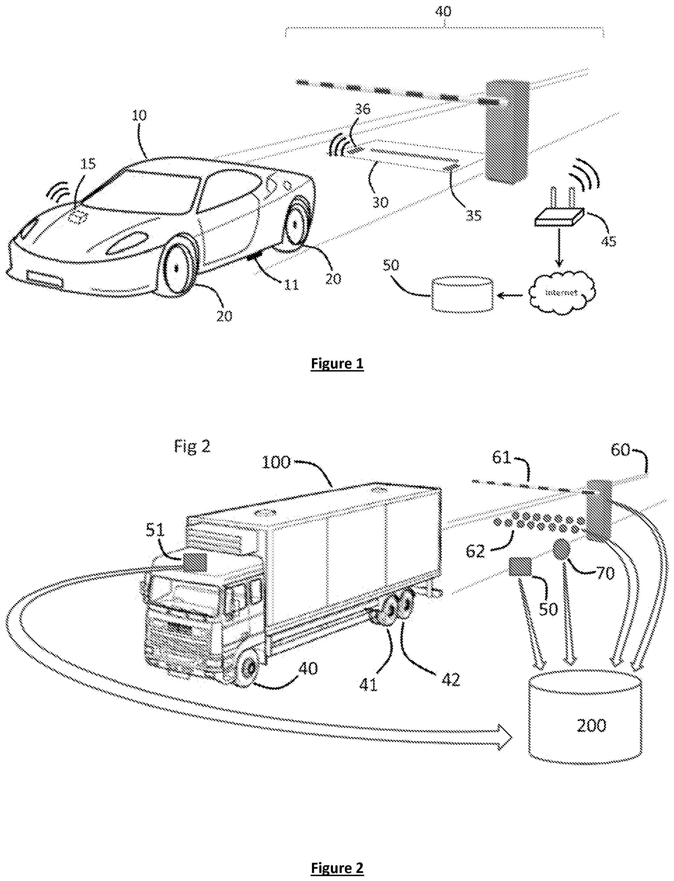

Une fois dans la base de données 50, les données peuvent ensuite être retransmises au véhicule 10 au moyen des systèmes de transmission de données 45 et 15. Dans l'exemple de la figure 1, le véhicule 10 est équipé de moyens de communication avec le conducteur dudit véhicule, pour la communication de tout type d'informations telles que précédemment décrites dans la présente demande.

La figure 2 décrit de façon schématique un système contenant plusieurs éléments permettant de délivrer de nouveaux services ou de nouvelles fonctionnalités par exemple au bénéfice des transporteurs routiers, des automobilistes ou des gestionnaires d'infrastructures. Dans l'exemple de la figure 2, il n'est pas nécessaire de rassembler systématiquement la totalité des briques présentes sur le schéma pour délivrer un nouveau service.

Dans cet exemple, un véhicule poids lourd 100 est équipé de chaque côté, de pneumatiques 40, 41 et 42, chacun comprenant un capteur de pression et/ou température et une puce RFID. Le capteur est, par exemple, collé au milieu de la face opposée à la bande de roulement du pneumatique, mais il pourrait être installé en une autre position sur la gomme intérieur du pneumatique ou sur la jante de la roue.

Un tel capteur permet de mesurer de nombreux paramètres des pneumatiques tel que, par exemple ;
- La pression de gonflage
- La température de l'air intérieur du pneumatique
- Le nombre de tours réalisés par ledit pneumatique lors du roulage
- La longueur d'aire de contact dudit pneumatique lorsque le capteur est collé sur la gomme intérieure du pneumatique, préférentiellement du côté opposé à la bande de roulement.

La puce RFID, quant à elle, peut être noyée dans la gomme du pneumatique, ou apposée sous forme d'étiquette, ou encore être installé dans une enveloppe de gomme apposée sur le pneumatique, couramment appelé « patch ».

Cette puce permet de stocker un identifiant qui permet de distinguer le pneumatique de tout autre pneumatique identique, et qui permet également de connaître la dimension, la gamme et la marque du pneumatique en faisant appel à une base de données.

Dans cet exemple, le véhicule 100 évolue sur une route 60, par exemple munie de barrière de péage 61, de systèmes de communication 50 entre la route 60 et le véhicule 100 et de lecteurs 70 positionnés le long de ladite route 60.

Les lecteurs 70 permettent de lire les identifiants RFID des pneumatiques lors de leur passage, et avantageusement ils permettent également de lire les données enregistrées dans le capteur de pression/température. Il permet également de lire un identifiant RFID du véhicule, s'il existe.

Afin de permettre au véhicule 100 de communiquer avec le système de communication 50, ledit véhicule 100 est muni d'un boitier de communication 51 compatible avec le boitier 50. Alternativement, le boitier 51 peut également être muni d'une fonctionnalité de positionnement par satellite. Alternativement, cette fonctionnalité de positionnement par satellite est embarquée dans un boitier distinct du boitier 51.

En outre, les systèmes de communication 50 et 51 peuvent échanger des informations avec une ou plusieurs bases de données 200 distantes. Il en va de même pour un éventuel boitier de positionnement par satellite séparé du boitier 51.

Enfin, la chaussée de la route 60 est munie d'un système 62 permettant l'évaluation de l'usure des pneumatiques montés sur les véhicules qui évoluent sur ladite route 60, un tel système ayant déjà été décrit plus haut.

Le système 62 de mesure de l'usure, la barrière de péage 61, ainsi que les lecteurs RFID 70 comprennent également des moyens pour communiquer les données qu'ils acquièrent à des bases de données 200 distantes. Ces moyens de communication permettent d'établir une communication directe avec les bases de données, ou une communication indirecte via l'utilisation de boitiers 50 disposés le long de la route.

Dans cet exemple, la barrière de péages est munie, en outre de moyens, non représentés, d'identification des clients possesseurs des véhicules qui empruntent la route 60, et de moyens d'horodatage des passages de véhicule.

Le système de mesure de l'usure 62 permet, en plus de la mesure de l'usure des pneumatiques, de détecter le sens de roulage des véhicules qui empruntent la route 60, de mesurer la surface de l'aire de contact des pneumatiques et de mesurer la vitesse de passage desdits pneumatiques.

A partir de ces différents éléments, et en les combinant entre eux, il est possible de déterminer différents indicateurs pertinents pour des fournisseurs de services.

Par exemple, la détection du sens de roulage des véhicules peut permettre de déterminer un indicateur de mauvais sens de roulage, et ainsi de fournir cet indicateur à des forces de l'ordre qui pourrait alors arrêter un véhicule qui s'engagerait par erreur dans le sens inverse au sens de circulation normal d'une route. Dans ce cas, le système 62 est préférentiellement positionné à l'entrée des aires de repos le long des routes, et transmet l'indicateur de mauvais sens de roulage à la base de données 200.

Dans un autre exemple, le lecteur de RFID 70 effectue une lecture des identifiants des pneumatiques et des véhicules et transmet ces informations à la base de données 200. Ce faisant, il devient possible d'associer automatiquement des pneumatiques à un véhicule. Cette fonctionnalité d'association automatique est un réel avantage pour les systèmes de gestion de maintenance des pneumatiques utilisés par les transporteurs routiers. En effet, ces systèmes nécessitent aujourd'hui une action de saisie manuelle, couteuse en temps, pour réaliser cette association.

Dans un troisième exemple, on détermine et on transmet à la base 200, les pressions, les usures et l'identité des pneumatiques dans la base de données 200. Dans ce cas, il devient possible d'opérer un service de maintenance des pneumatiques depuis ladite base de données 200.

Dans un exemple où l'indicateur pertinent est un indicateur de mauvaise pression de gonflage, on pourrait envoyer une alerte au conducteur qui se dirigerait alors vers un centre de maintenance habilité à réparer le pneumatique défectueux et à ajuster la pression au bon niveau.

Dans le cas où l'indicateur est un indicateur d'évolution de l'usure, il peut indiquer un futur besoin de recreusage, de rechapage, de permutation ou de rotation sur jante. Ainsi, un tel indicateur pourrait être utilisé pour programmer l'intervention nécessaire sur une aire de repos équipée d'un centre de maintenance ou demander au chauffeur du véhicule de dévier sa route pour rejoindre un tel centre.

Dans un quatrième exemple, on pourrait utiliser une mesure de la longueur d'aire de contact ou de surface d'aire de contact, pour estimer la charge portée par les pneumatiques.

En effet, la surface de l'aire de contact d'un pneumatique dépend de sa pression de gonflage et de la charge qu'il transporte. Dans le cas des véhicules Poids lourd, l'évolution de la surface de l'aire de contact se fait essentiellement via l'évolution de la longueur de ladite aire de contact. Ainsi, l'information de charge portée par chaque pneumatique d'un véhicule pourrait s'estimer à partir de la longueur mesurée par le capteur équipant lesdits pneumatiques et par la pression mesurée par le même capteur.

Alternativement, la surface d'aire de contact mesurée par le système de mesure de l'usure 62 pourrait être combinée à la mesure de pression réalisée par un capteur présent à l'intérieur des pneumatiques, qu'il soit collé sur lesdits pneumatiques ou simplement fixé sur la jante correspondante. Dans ce cas, il serait possible d'estimer la charge portée par des pneumatiques de véhicules de tourisme ou poids lourds.

Dans un exemple de réalisation, les informations de pression et de surface ou longueur d'aire de contact sont transmises à la base de données distante 200 afin que l'estimation de la charge se fasse au moyen d'un système d'information déporté. Il est alors possible de déterminer un indicateur de charge véhicule pour fournir un des services suivants :
- Informer les pouvoirs publics lorsqu'un véhicule poids lourd chargé au-delà des limites légales, évolue sur la voie publique. Les forces de polices pourraient alors arrêter le véhicule concerné afin d'éviter une dégradation prématurée de la chaussée.
- Proposer une tarification de la circulation sur autoroute dépendant du niveau de charge des véhicules. Cela permettrait de différencier les tarifs autoroutiers en fonction de l'impact d'un véhicule sur la dégradation de la chaussée.
- Détecter d'éventuelles charges excessives sur des véhicules de tourisme. Dans le cas d'un positionnement du système de mesure 62 à une barrière de péage, l'identification du véhicule par la barrière de péage ou par un lecteur de RFID 70 permettrait de croiser les deux informations et d'éviter de laisser entrer sur l'autoroute des véhicules dont le niveau de charge ne permet pas d'assurer un niveau de sécurité suffisant au déplacement.

Dans un autre exemple, un procédé selon l'invention vise à l'amélioration de la sécurité des déplacements sur route ou autoroute, en déterminant un indicateur concernant l'adhérence du véhicule sur un sol de roulage. A cet effet, les informations mesurées par le système de mesure de l'usure 62, ainsi que les identifiants des pneumatiques et du véhicule, et les données de géolocalisation du véhicule, sont transmis à la base de données distante 200. En outre dans cette même base de données, des informations concernant la météo sur le réseau routier sont acheminées depuis une source de données externes.

A partir de ces informations, et en connaissant les caractéristiques du pneumatique, il est possible de déterminer un indicateur pertinent concernant les risques de perte d'adhérence d'un véhicule, et ainsi de fournir les services suivants :
- Alerter et conseiller le conducteur dans le cas de pneumatique approchant la limite légale d'usure si ledit véhicule approche d'une zone concernée par des intempéries, non compatibles avec le niveau d'usure des pneumatiques. Par exemple, lors d'un orage violent sur le réseau routier.
- Alerter et conseiller le conducteur si le type ou le niveau d'usure des pneumatiques rend risqué le déplacement du véhicule lors de précipitations neigeuses sur le réseau routier. De cette façon, on pourrait éviter le blocage du véhicule dont les pneumatiques seraient des pneumatique été ou des pneumatiques trop usés, en bord de route. Un trajet alternatif plus adapté aux pneumatiques pourrait alors être automatiquement proposé.
- Prendre le contrôle du véhicule via des systèmes de sécurité active, afin de limiter la vitesse du véhicule et empêcher une perte d'adhérence par aquaplanning.
- Pour les forces de l'ordre, de mettre à profit les informations d'usure, d'identification des pneumatiques et d'identification de véhicule évoqués dans ce brevet, afin de détecter et contraindre des véhicules dont le type et l'état des pneumatiques n'est pas compatible avec les conditions météorologiques, à s'arrêter sur des aires de repos.

Dans cet exemple, les alertes et conseils sont émis automatiquement depuis le système d'information abritant la base de données 200 et transmis aux véhicules via les boitiers de communication 50 et 51. A cet effet, le système d'information abritant la base de données 200, serait muni d'un moteur scientifique capable de calculer les limites d'adhérence, selon les diverses conditions météo, en prenant en compte le type de pneumatique.

En effet, les sculptures des pneumatiques sont plus ou moins entaillées selon l'usage pour lequel ils sont prévus. Ainsi, à usure identique, leur capacité à évacuer l'eau de pluie peut être plus ou moins élevée. Ceci conduisant à une plus ou moins grande sensibilité à l'aquaplanning. De même, le type de matériau composant la bande de roulement, peut avoir un impact sur l'adhérence en condition humide et/ou de température basse. L'ensemble de ces éléments pourraient être pris en compte dans le moteur scientifique précédemment évoqué, afin de délivrer les meilleurs services possible.

Il est important de noter que les mêmes services peuvent être apportés au conducteur si les pneumatiques montés sur les véhicules sont renseignés directement par une action humaine dans la base de données 200 et non pas automatiquement détectés par des lecteurs de RFID 70.

## Revendications

1. Procédé de fourniture d'un service lié à l'état et/ou au comportement d'un véhicule et/ou d'un pneumatique, le procédé comprenant les étapes suivantes :
- Lors du passage d'un véhicule au niveau d'une infrastructure routière équipée d'un système d'évaluation de l'état d'un véhicule, on détermine un identifiant du véhicule et/ou d'un pneumatique du véhicule,
- Lors de ce même passage, on détermine au moins un paramètre représentatif de l'état du véhicule et/ou d'un composant du véhicule,
- On transmet les données déterminées à un serveur de données distant,
- A partir des données d'identification, on récupère des données externes concernant le véhicule et/ou le pneumatique et/ou des conditions de roulage,
- On combine les informations déterminées avec les données externes, pour déterminer un indicateur pertinent concernant l'état et/ou le comportement d'un véhicule,
- On transmet l'indicateur pertinent à un fournisseur de service lié à l'état et/ou au comportement d'un véhicule et/ou d'un pneumatique,
**Caractérisé en ce que** le procédé comprend une étape de géolocalisation du véhicule lors de son passage sur le système d'évaluation et que les données de géolocalisation sont transmises au serveur de données distant.

2. Procédé selon la revendication 1, dans lequel l'étape de détermination d'un identifiant comprend une étape de lecture d'un identifiant RFID installé sur le véhicule et/ou sur un pneumatique.

3. Procédé selon l'une des revendications précédentes, dans lequel le paramètre représentatif de l'état du véhicule et/ou d'un composant du véhicule est compris dans le groupe comprenant : la pression d'un pneumatique, la température d'air interne d'un pneumatique, le niveau d'usure d'un pneumatique, la longueur d'aire de contact d'un pneumatique, la vitesse du véhicule, le sens de roulage du véhicule, la charge portée par le véhicule et/ou par chaque pneumatique.

4. Procédé selon l'une des revendications précédentes, dans lequel les données externes sont comprises dans le groupe comprenant : les dimensions et/ou caractéristiques d'un pneumatique, les caractéristiques du véhicule, des données météorologiques, des données concernant l'état d'une route.

5. Procédé selon l'une des revendications précédentes dans lequel l'étape de détermination d'un paramètre représentatif de l'état du véhicule et/ou d'un composant du véhicule comprend une étape de lecture de données stockées dans un capteur de pression et/ou température installé sur ou dans un pneumatique du véhicule et/ou sur une jante d'une roue du véhicule.

6. Procédé selon l'une des revendications précédentes dans lequel l'étape de détermination d'un paramètre comprend une étape de mesure d'une hauteur de gomme restante sur un pneumatique par des capteurs magnétiques intégrés dans le système d'évaluation.

7. Procédé selon l'une des revendications précédentes, dans lequel l'indicateur pertinent est un indicateur de surcharge véhicule, et le fournisseur de service est un concessionnaire autoroutier et/ou des forces de l'ordre.

8. Procédé selon l'une des revendications 1 à 7, dans lequel l'indicateur pertinent est un indicateur de mauvais sens de roulage, et le fournisseur de service est un concessionnaire autoroutier et/ou des forces de l'ordre.

9. Procédé selon l'une des revendications 1 à 7, dans lequel l'indicateur pertinent est un indicateur d'évolution de l'usure d'un pneumatique, et le fournisseur de service est un gestionnaire de flotte de véhicules et/ou un acteur de la maintenance véhicule.

10. Procédé selon l'une des revendications 1 à 7, dans lequel l'indicateur pertinent est un indicateur de mauvaise pression de gonflage d'un pneumatique, et le fournisseur de service est un gestionnaire de flotte de véhicules et/ou un acteur de la maintenance véhicule.

11. Procédé selon l'une des revendications précédentes, dans lequel le système d'évaluation de l'état d'un véhicule comprend les éléments suivants :
- Un sous-système de mesure de l'état d'au moins un pneumatique du véhicule,
- Un sous-système de lecture de données d'identification d'un pneumatique et/ou du véhicule,
- Un sous-système de transmission des données mesurées et des données d'identification en direction d'une base de données distantes,
les trois sous-systèmes étant installés dans un ou plusieurs boitiers destinés à être installés sur ou à proximité d'une infrastructure routière, au moins l'un des boitiers étant destiné à être installé dans une zone de roulage contrainte de l'infrastructure routière.

## Patentansprüche

1. Verfahren zur Bereitstellung eines mit dem Zustand und/oder dem Verhalten eines Fahrzeugs und/oder eines Luftreifens verbundenen Diensts, wobei das Verfahren die folgenden Schritte enthält:
- bei der Durchfahrt eines Fahrzeugs im Bereich einer mit einem Bewertungssystem des Zustands eines Fahrzeugs ausgestatteten Straßeninfrastruktur wird eine Kennung des Fahrzeugs und/oder eines Luftreifens des Fahrzeugs bestimmt,
- bei dieser gleichen Durchfahrt wird mindestens ein für den Zustand des Fahrzeugs und/oder eines Bestandteils des Fahrzeugs repräsentativer Parameter bestimmt,
- die bestimmten Daten werden an einen entfernten Datenserver übertragen,
- ausgehend von den Identifikationsdaten werden externe Daten betreffend das Fahrzeug und/oder den Luftreifen und/oder Fahrbedingungen abgerufen,
- die bestimmten Informationen werden mit den externen Daten kombiniert, um einen aussagekräftigen Indikator betreffend den Zustand und/oder das Verhalten eines Fahrzeugs zu bestimmen,
- der aussagekräftige Indikator wird an einen Dienstleister übertragen, der mit dem Zustand und/oder dem Verhalten eines Fahrzeugs und/oder eines Luftreifens verbunden ist,
**dadurch gekennzeichnet, dass** das Verfahren einen Schritt der Geolokalisierung des Fahrzeugs bei seiner Durchfahrt über das Bewertungssystem enthält, und dass die Geolokalisierungsdaten an den entfernten Datenserver übertragen werden.

2. Verfahren nach Anspruch 1, wobei der Schritt der Bestimmung einer Kennung einen Schritt des Lesens einer auf dem Fahrzeug und/oder auf einem Luftreifen installierten RFID-Kennung enthält.

3. Verfahren nach einem der vorhergehenden Ansprüche, wobei der für den Zustand des Fahrzeugs und/oder eines Bestandteils des Fahrzeugs repräsentative Parameter in der Gruppe enthalten ist, die enthält: den Druck eines Luftreifens, die Innenlufttemperatur eines Luftreifens, den Abnutzungsgrad eines Luftreifens, die Länge einer Aufstandsfläche eines Luftreifens, die Geschwindigkeit des Fahrzeugs, die Fahrtrichtung des Fahrzeugs, die vom Fahrzeug und/oder von jedem Luftreifen getragene Last.

4. Verfahren nach einem der vorhergehenden Ansprüche, wobei die externen Daten in der Gruppe enthalten sind, die enthält: die Abmessungen und/oder Merkmale eines Luftreifens, die Merkmale des Fahrzeugs, meteorologische Daten, Daten betreffend den Zustand einer Straße.

5. Verfahren nach einem der vorhergehenden Ansprüche wobei der Schritt der Bestimmung eines für den Zustand des Fahrzeugs und/oder eines Bestandteils des Fahrzeugs repräsentativen Parameters einen Schritt des Lesens von in einem Druck- und/oder Temperaturfühler gespeicherten Daten enthält, der auf oder in einem Luftreifen des Fahrzeugs und/oder auf einer Felge eines Rads des Fahrzeug installiert ist.

6. Verfahren nach einem der vorhergehenden Ansprüche wobei der Schritt der Bestimmung eines Parameters einen Schritt der Messung einer verbleibenden Gummihöhe auf einem Luftreifen durch in das Bewertungssystem integrierte Magnetfühler enthält.

7. Verfahren nach einem der vorhergehenden Ansprüche, wobei der aussagekräftiger Indikator ein Fahrzeugüberlastungsindikator ist, und der Dienstleister ein Autobahn-Konzessionär und/oder die Polizei ist.

8. Verfahren nach einem der Ansprüche 1 bis 7, wobei der aussagekräftige Indikator ein Indikator der falschen Fahrrichtung ist, und der Dienstleister ein Autobahn-Konzessionär und/oder die Polizei ist.

9. Verfahren nach einem der Ansprüche 1 bis 7, wobei der aussagekräftige Indikator ein Indikator der Entwicklung der Abnutzung eines Luftreifens ist, und der Dienstleister ein Manager einer Fahrzeugflotte und/oder ein Akteur der Fahrzeugwartung ist.

10. Verfahren nach einem der Ansprüche 1 bis 7, wobei der aussagekräftige Indikator ein Indikator eines schlechten Fülldrucks eines Luftreifens ist, und der Dienstleister ein Manager einer Fahrzeugflotte und/oder ein Akteur der Fahrzeugwartung ist.

11. Verfahren nach einem der vorhergehenden Ansprüche, wobei das Bewertungssystem des Zustands eines Fahrzeugs die folgenden Elemente enthält:
- ein Teilsystem zur Messung des Zustands mindestens eines Luftreifens des Fahrzeugs,
- ein Teilsystem des Lesens von Identifikationsdaten eines Luftreifens und/oder des Fahrzeugs,
- ein Teilsystem der Übertragung der gemessenen Daten und der Identifikationsdaten in Richtung einer entfernten Datenbank,
wobei die drei Teilsysteme in ein oder mehrere Gehäuse eingebaut sind, die dazu bestimmt sind, auf oder in der Nähe einer Straßeninfrastruktur aufgestellt zu werden, wobei mindestens eines der Gehäuse dazu bestimmt ist, in einer eingeschränkten Fahrzone der Straßeninfrastruktur aufgestellt zu werden.

## Claims

1. Method for providing a service linked to the condition and/or behaviour of a vehicle and/or of a tyre, the method comprising the following steps:
- when a vehicle passes a road infrastructure equipped with a system for assessing the condition of a vehicle, determining an identifier of the vehicle and/or of a tyre of the vehicle,
- at the same time, determining at least one parameter representative of the condition of the vehicle and/or of a component of the vehicle,
- transmitting the determined data to a remote data server,
- from the identification data, retrieving external data concerning the vehicle and/or the tyre and/or the running conditions,
- combining the determined information with the external data such as to determine a relevant indicator concerning the condition and/or the behaviour of a vehicle,
- transmitting the relevant indicator to a provider of a service linked to the condition and/or to the behaviour of a vehicle and/or of a tyre.
**characterized in that** the method comprises a step of geolocation of the vehicle during which it passes over the assessment system and the geolocation data are transmitted to the remote data server.

2. Method according to Claim 1, wherein the step of determining an identifier comprises a step of reading an RFID identifier installed on the vehicle and/or on a tyre.

3. Method according to one of the preceding claims, wherein the parameter representative of the condition of the vehicle and/or of a component of the vehicle is included in the group comprising: the pressure of a tyre, the temperature of air inside a tyre, the level of wear of a tyre, the length of the area of contact of a tyre, the speed of the vehicle, the direction of travel of the vehicle, the load carried by the vehicle and/or by each tyre.

4. Method according to one of the preceding claims, wherein the external data are included in the group comprising: the dimensions and/or characteristics of a tyre, the characteristics of the vehicle, meteorological data, data concerning the condition of a road.

5. Method according to one of the preceding claims, wherein the step of determining a parameter representative of the condition of the vehicle and/or of a component of the vehicle comprises a step of reading data stored in a pressure and/or temperature sensor installed on or in a tyre of the vehicle and/or on a wheel rim of the vehicle.

6. Method according to one of the preceding claims, wherein the step of determining a parameter comprises a step of measuring a depth of rubber remaining on a tyre by means of magnetic sensors integrated into the assessment system.

7. Method according to one of the preceding claims, wherein the relevant indicator is a vehicle overload indicator and the provider of a service is a motorway concession company and/or law enforcement personnel.

8. Method according to one of Claims 1 to 7, wherein the relevant indicator is an indicator of an incorrect direction of travel and the provider of a service is a motorway concession company and/or law enforcement personnel.

9. Method according to one of Claims 1 to 7, wherein the relevant indicator is an indicator of the evolution of the wear of a tyre and the provider of a service is a vehicle fleet manager and/or a vehicle maintenance agent.

10. Method according to one of Claims 1 to 7, wherein the relevant indicator is an indicator of the incorrect inflation pressure of a tyre and the provider of a service is a vehicle fleet manager and/or a vehicle maintenance agent.

11. Method according to one of the preceding claims, wherein the system for assessing the condition of a vehicle comprises the following elements:
- a subsystem for measuring the condition of at least one tyre of the vehicle,
- a subsystem for reading identification data of a tyre and/or of the vehicle,
- a subsystem for transmitting measured data and identification data to a remote database,
the three subsystems being installed in one or more casings designed to be installed on or near a road infrastructure, at least one of the casings being designed to be installed in a mandatory travel zone of the road infrastructure.
